# EUROPÄISCHE PATENTSCHRIFT

(11) **EP 2 608 987 B1**
(45) Veröffentlichungstag und Bekanntmachung des Hinweises auf die Patenterteilung: **09.09.2015**
(21) Anmeldenummer: 11718054.7
(22) Anmeldetag: 03.05.2011
(51) Int. Cl.: B60N 2/48

(54) **KOPFSTÜTZE MIT EINER VERDREHSICHERUNG**
HEAD RESTRAINT HAVING AN ANTI-TURN MECHANISM
APPUIE-TÊTE À PROTECTION ANTIROTATION

(30) Priorität: 23.08.2010 DE 102010035139
(43) Veröffentlichungstag der Anmeldung: 03.07.2013
(73) Patentinhaber: Johnson Controls GmbH, 51399 Burscheid (DE)
(72) Erfinder: STEIN, Alexander, 2447 San Nicolas, Pangasinan, Llocos Region (PH)
(74) Vertreter: Finger, Catrin
(86) Internationale Anmeldenummer: PCT/EP2011/057034
(87) Internationale Veröffentlichungsnummer: WO 2012/025257

(56) Entgegenhaltungen:
- DE-A1- 3 045 391
- DE-U1- 8 303 896
- US-A- 4 256 341

## Beschreibung

Die Erfindung betrifft eine Kopfstützenanordnung zur verdrehsicheren Anordnung einer Kopfstütze an einem aus einer Rückenlehne und einem Sitzflächenteil gebildeten Fahrzeugsitz gemäß dem Oberbegriff des Anspruchs 1.

Im Stand der Technik wird der runde Querschnitt der Kopfstützenstangen in dem Bereich, in welchem die Kopfstützenstangen im Kopfstützenkörper angeordnet sind, abgeflacht. Ein Aufnahmebereich im Kopfstützenkörper ist korrespondierend zu der Abflachung ausgebildet. Durch diese Abflachung entsteht ein Hebelarm, welcher einer Verdrehung oder Torsion der Kopfstütze um die Fahrzeughochachse entgegenwirkt.

Die DE 201 10 342 U1 beschreibt eine Kopfstützenanordnung für einen aus einer Rückenlehne und einem unteren Sitzflächenteil bestehenden Fahrzeugsitz, mit einem über Haltemittel mit der Rückenlehne verbundenen bzw. verbindbaren Kopfstützteil, wobei die Haltemittel derart ausgebildet sind, dass das Kopfstützteil zwischen einer oberhalb der Rückenlehne entsprechend ihrer Kopf-Stützfunktion angeordneten Gebrauchsstellung und einer Nichtgebrauchsstellung überführbar und in beiden Stellungen lösbar arretiert ist, wobei das Kopfstützteil in der Nichtgebrauchsstellung gegenüber der Gebrauchsstellung einerseits in Richtung des Sitzflächenteils abgesenkt und andererseits im Bereich einer Lehnenvorderseite vor der Rückenlehne liegend angeordnet ist.

Weitere Kopfstützen sind beispielsweise aus der DE 30 45 391 A1, der DE 83 03 896 U1 und der US 4,256,341 A1 bekannt.

Aufgabe der vorliegenden Erfindung ist es, eine gegenüber dem Stand der Technik verbesserte und insbesondere belastbarere Verdrehsicherung für eine Kopfstütze an einem Fahrzeugsitz anzugeben.

Hinsichtlich der Kopfstützenanordnung zur verdrehsicheren Anordnung einer Kopfstütze an einem aus einer Rückenlehne und einem Sitzflächenteil gebildeten Fahrzeugsitz wird die Aufgabe durch die im Anspruch 1 angegebenen Merkmale gelöst.

Vorteilhafte Weiterbildungen der Erfindung sind Gegenstand der Unteransprüche.

Bei der Kopfstützenanordnung zur verdrehsicheren Anordnung einer Kopfstütze an einem aus einer Rückenlehne und einem Sitzflächenteil gebildeten Fahrzeugsitz, wobei die Kopfstütze an der Rückenlehne mittels zumindest einer Kopfstützenstange höhenverstellbar angeordnet ist, ist erfindungsgemäß an einem oberen Ende der Kopfstützenstangen jeweils ein Bereich ausgeformt, in welchem der Verlauf der Kopfstützenstangen eine Biegung mit einem Radius beschreibt, wobei die Kopfstützenstangen mit dem gebogenen Bereich formschlüssig in der Kopfstütze angeordnet sind. Daraus resultiert ein im Vergleich zum Stand der Technik vergrößerter Hebelarm, welcher einer Verdrehung der Kopfstütze und insbesondere der Kopfstützenstangen gegeneinander entgegenwirkt. Somit sind eine erfindungsgemäße Kopfstützenanordnung und insbesondere deren Verdrehsicherung im Vergleich zum Stand der Technik belastbarer und gegenüber einer Verdrehung widerstandsfähiger.

Die Biegung ist bevorzugt mit einem konstanten Radius ausgebildet, wobei die Größe des Hebelarms und die aus diesem resultierende Widerstandskraft gegen die Verdrehung der Kopfstütze vorteilhafterweise mittels des Radius der Biegung der Kopfstützenstange einstell- und/oder variierbar ist.

In einer vorteilhaften Ausführungsform ist eine Innenseite der Biegung im Bereich in Fahrtrichtung des Fahrzeugs ausgerichtet. Dies ermöglicht eine Aufnahme besonders großer Kräfte und verleiht den Kopfstützenstangen zusätzliche mechanische Stabilität.

Besonders vorteilhafterweise sind die Kopfstützenstangen aus einem Rohrabschnitt mit einem runden Querschnitt gebildet. Dabei ist eine Biegung, im Vergleich zu einer herkömmlichen Abflachung, kostengünstiger auf eine Kopfstützenstange mit rundem Querschnitt applizierbar. Weiterhin ist eine Verletzungsgefahr für Fahrzeuginsassen reduziert, da eine Kopfstützenstange mit rundem Querschnitt keinerlei Kanten aufweist, aus denen Verletzungen resultieren können.

Besonders bevorzugt ist beidseitig eines Kopfstützenkörpers der Kopfstütze jeweils ein Aufnahmebereich am Kopfstützenkörper einstückig aus- oder angeformt. Dadurch ist der Kopfstützenkörper kosten- und zeitreduziert herstellbar, insbesondere in einer Großserienproduktion.

Der Aufnahmebereich für die Kopfstützenstangen ist im Kopfstützenkörper korrespondierend zu den Kopfstützenstangen ausgeformt. In einer bevorzugten Ausführungsform umfasst der Aufnahmebereich eine Aussparung, welche in Verlauf und Querschnitt korrespondierend zu dem Bereich der Kopfstützenstangen ausgeformt ist. Dies ermöglicht die spielfreie, formschlüssige und somit verdrehsichere Anordnung des Kopfstützenkörpers an den Kopfstützenstangen.

Im Betrieb der Kopfstütze ist der gebogene Bereich einer jeden Kopfstützenstange bevorzugter Weise vollständig oder nahezu vollständig formschlüssig in den Aussparungen des Kopfstützenkörpers angeordnet.

In einer besonders vorteilhaften Ausführungsform ist der Kopfstützenkörper einstückig aus einem Kunststoff oder einem Kunststoffgemisch in einem Gieß- oder Spritzgießverfahren hergestellt. Dadurch kann der Kopfstützenkörper besonders vorteilhaft mittels eines herkömmlichen Gießoder Spritzgießverfahrens, dessen Verfahrensparameter bekannt und gut beherrschbar sind, in einer Großserienproduktion hergestellt werden.

Anhand der beigefügten schematischen Figuren wird die Erfindung näher erläutert.

Dabei zeigen:
- Figur 1: schematisch eine perspektivische Ansicht einer Kopfstütze mit einer Verdrehsicherung,
- Figur 2: schematisch eine Frontansicht einer Kopfstütze mit einer Verdrehsicherung und
- Figur 3: schematisch eine Schnittdarstellung einer Kopfstütze mit einer Verdrehsicherung.

Einander entsprechende Teile sind in allen Figuren mit den gleichen Bezugszeichen versehen.

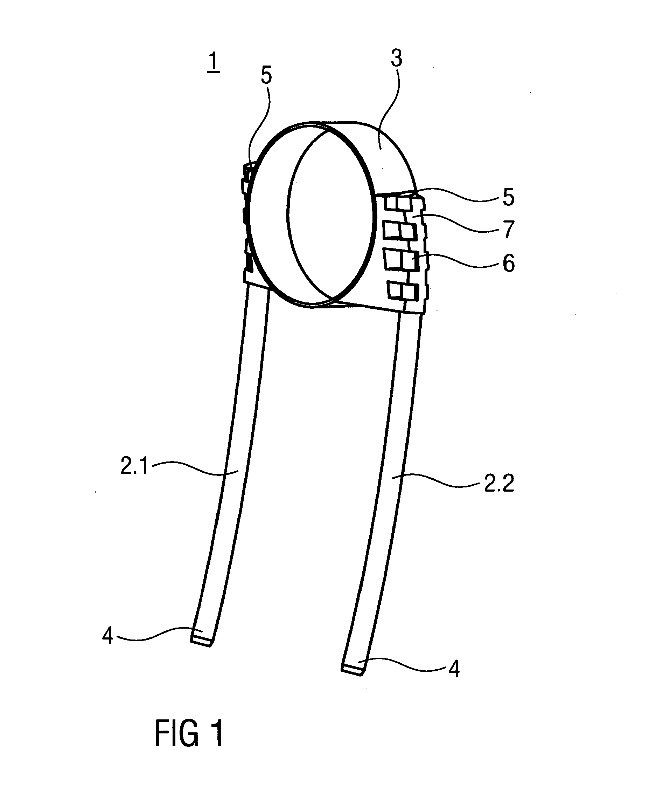

In Figur 1 ist schematisch eine perspektivische Ansicht einer Kopfstütze 1 mit einer Verdrehsicherung dargestellt.

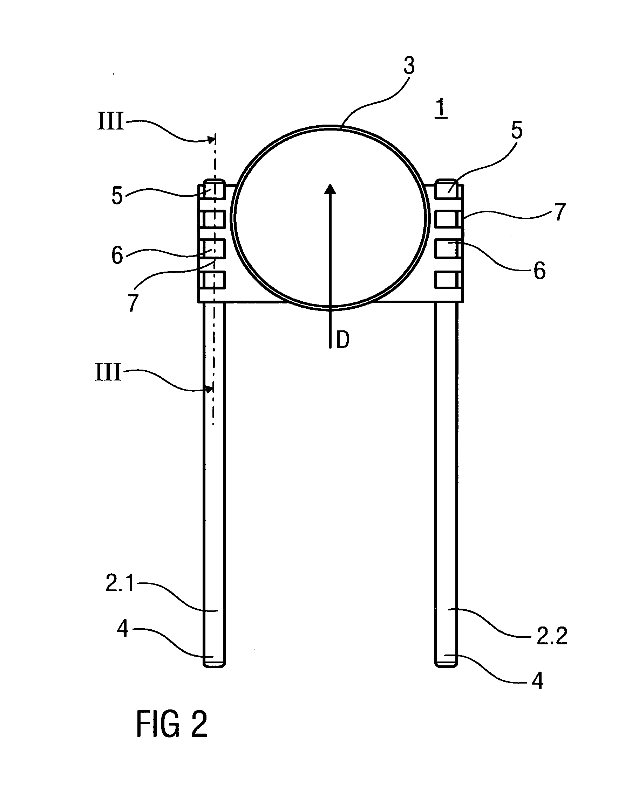

In Figur 2 ist schematisch eine Frontansicht der Kopfstütze 1 mit der Verdrehsicherung dargestellt.

Die Kopfstütze 1 umfasst zumindest zwei Kopfstützenstangen 2.1 und 2.2 und einen Kopfstützenkörper 3.

Am Kopfstützenkörper 3 sind ein nicht dargestelltes Kopfstützenpolster und/oder ein Kopfstützenbezug anbringbar.

Der Kopfstützenkörper 3 ist vorzugsweise aus Kunststoff in einem herkömmlichen Gieß- oder Spritzgießverfahren hergestellt.

Die Kopfstützenstangen 2.1 und 2.2 sind im Wesentlichen aus einem Rohrabschnitt mit einem runden Querschnitt gebildet.

Ein unteres Ende 4 der Kopfstützenstangen 2.1 und 2.2 ist jeweils korrespondierend zu einer nicht dargestellten herkömmlichen Aussparung in einer Sitzlehne eines Fahrzeugsitzes ausgeformt und im Betrieb der Kopfstütze 1 in dieser Aussparung der Sitzlehne angeordnet.

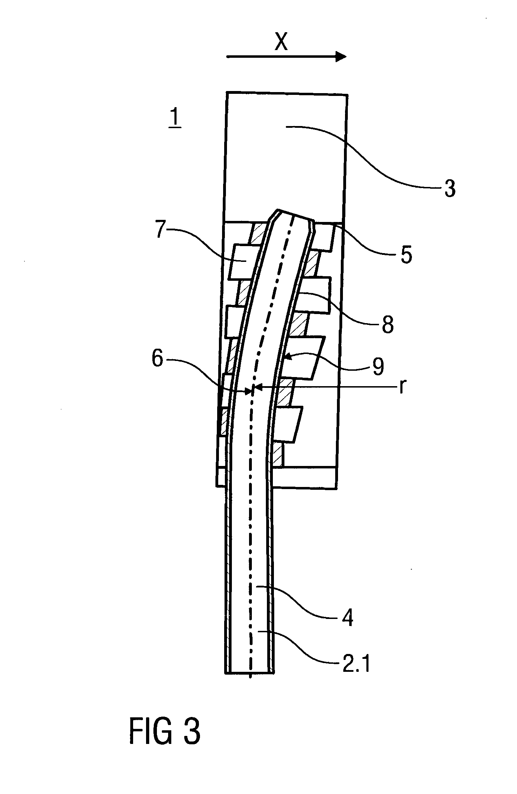

An einem oberen Ende 5 der Kopfstützenstangen 2.1 und 2.2 ist jeweils ein Bereich 6 ausgeformt, in welchem der Verlauf der Kopfstützenstangen 2.1 und 2.2 eine Biegung mit einem Radius r beschreibt, wie in Figur 3 dargestellt. Dabei ist Radius r über den gesamten Verlauf der Biegung konstant.

Beidseitig des Kopfstützenkörpers 3 ist jeweils ein Aufnahmebereich 7 an dem Kopfstützenkörper 3 aus- oder angeformt. Besonders vorteilhafterweise sind die Aufnahmebereiche 7 einstückig am Kopfstützenkörper 3 ausgeformt, so dass Kopfstützenkörper 3 und Aufnahmebereiche 7 eine Baueinheit bilden. Jeder Aufnahmebereich 7 umfasst eine Aussparung 8, welche in Verlauf und Querschnitt korrespondierend zu dem Bereich 6 der jeweiligen Kopfstützenstangen 2.1 und 2.2 ausgeformt ist.

Der Verlauf der Aussparung 8 ist derart ausgerichtet, dass eine Innenseite 9 der Biegung in Fahrtrichtung X ausgerichtet ist.

Im Betrieb der Kopfstütze 1 ist der Bereich 6 einer jeden Kopfstützenstange 2.1 und 2.2 vollständig oder nahezu vollständig formschlüssig in den jeweiligen Aussparungen 8 des Kopfstützenkörpers 3 angeordnet.

Daraus resultierend sind im Betrieb der Kopfstütze 1 die beiden oberen Enden 5 der Kopfstützenstangen 2.1 und 2.2 in Fahrtrichtung X geneigt.

Durch die spielfreie und verdrehsichere Anordnung der Kopfstützenstangen 2.1 und 2.2 in den Aussparungen 8 des Kopfstützenkörpers 3 ist eine Verdrehung der Kopfstütze 1 um eine Drehachse D, welche im Bereich des Kopfstützenkörpers 3 im Wesentlichen parallel zur Fahrzeughochachse verläuft, sicher vermieden.

Erfindungsgemäß ist eine Rotation der Kopfstützenstangen 2.1 und 2.2 in den jeweiligen Aussparungen 8 des Kopfstützenkörpers 3 um eine Längsachse der jeweiligen Kopfstützenstangen 2.1 und 2.2 durch die Biegung im Bereich 6 der Kopfstützenstangen 2.1 und 2.2 sicher verhindert.

Im Betrieb der Kopfstütze 1 tritt eine solche Verdrehung beispielsweise bei einer asymmetrisch auf die Kopfstütze 1 und insbesondere den Kopfstützenkörper 3 einwirkenden Kraft auf.

Dabei wird beispielsweise die dem Krafteinleitungspunkt nächste Kopfstützenstange 2.1 in Fahrtrichtung X nach hinten verlagert. Die mittels des Kopfstützenkörpers 3 mit dieser Kopfstützenstange 2.1 gekoppelte Kopfstützenstange 2.2 wird resultierend aus der Rotation des Kopfstützenkörpers 3 um die Drehachse D in entgegengesetzter Richtung nach vorn verlagert. In Abhängigkeit von der Größe der asymmetrisch einwirkenden Kraft können durch diese Verdrehung beispielsweise herkömmliche Kopfstützenstangen kollabieren.

Durch die vorliegende Erfindung, die formschlüssige Anordnung zweier Kopfstützenstangen 2.1 und 2.2 mit einem gebogenen Bereich 6 im Kopfstützenkörper 3, ist die Verdrehung der Kopfstütze 1 um die Drehachse D verhindert.

### Bezugszeichenliste

- 1: Kopfstütze
- 2.1, 2.2: Kopfstützenstange
- 3: Kopfstützenkörper
- 4: unteres Ende
- 5: oberes Ende
- 6: Bereich
- 7: Aufnahmebereich
- 8: Aussparung
- 9: Innenseite
- X: Fahrtrichtung
- D: Drehachse
- r: Radius

## Patentansprüche

1. Kopfstützenanordnung zur verdrehsicheren Anordnung einer Kopfstütze (1) an einem aus einer Rückenlehne und einem Sitzflächenteil gebildeten Fahrzeugsitz, wobei die Kopfstütze (1) an der Rückenlehne mittels zumindest einer Kopfstützenstange (2.1, 2.2) höhenverstellbar angeordnet ist,
wobei an einem oberen Ende (5) der Kopfstützenstangen (2.1, 2.2) jeweils ein Bereich (6) ausgeformt ist, in welchem der Verlauf der Kopfstützenstangen (2.1, 2.2) eine Biegung mit einem Radius (r) beschreibt, wobei die Kopfstützenstangen (2.1, 2.2) mit dem gebogenen Bereich (6) formschlüssig in der Kopfstütze (1) angeordnet sind,
**dadurch gekennzeichnet, dass** die Kopfstütze (1) einen kreisförmigen Kopfstützenkörper (3) umfasst und dass beidseitig des Kopfstützenkörpers (3) jeweils ein Aufnahmebereich (7) ausgeformt oder angeformt ist, wobei der Kopfstützenkörper (3) in Längsausdehnung der Kopfstütze (1) zumindest in Richtung der freien Enden der Aufnahmebereiche (7) diese teilweise überragt.

2. Kopfstützenanordnung nach Anspruch 1,
**dadurch gekennzeichnet, dass** die Biegung im Bereich (6) mit einem konstanten Radius (r) ausgebildet ist.

3. Kopfstützenanordnung nach Anspruch 1 oder 2,
**dadurch gekennzeichnet, dass** eine Innenseite (9) der Biegung im Bereich (6) in Fahrtrichtung (X) ausgerichtet ist.

4. Kopfstützenanordnung nach einem der vorherigen Ansprüche,
**dadurch gekennzeichnet, dass** die Kopfstützenstangen (2.1, 2.2) aus einem Rohrabschnitt mit einem runden Querschnitt gebildet sind.

5. Kopfstützenanordnung nach Anspruch 1,
**dadurch gekennzeichnet, dass** der Aufnahmebereich (7) für die Kopfstützenstangen (2.1, 2.2) im Kopfstützenkörper (3) korrespondierend zu den Kopfstützenstangen (2.1, 2.2) ausgeformt ist.

6. Kopfstützenanordnung nach Anspruch 1 oder 5,
**dadurch gekennzeichnet, dass** der Aufnahmebereich (7) eine Aussparung (8) umfasst, welche in Verlauf und Querschnitt korrespondierend zu dem Bereich (6) der Kopfstützenstangen (2.1, 2.2) ausgeformt ist.

7. Kopfstützenanordnung nach Anspruch 6,
**dadurch gekennzeichnet, dass** im Betrieb der Kopfstütze (1) der gebogene Bereich (6) einer jeden Kopfstützenstange (2.1, 2.2) vollständig oder nahezu vollständig formschlüssig in den Aussparungen (8) des Kopfstützenkörpers (3) angeordnet ist.

8. Kopfstützenanordnung nach einem der vorherigen Ansprüche,
**dadurch gekennzeichnet, dass** der Kopfstützenkörper (3) aus einem Kunststoff oder einem Kunststoffgemisch in einem Gieß- oder Spritzgießverfahren hergestellt ist.

## Claims

1. A headrest arrangement for arranging a headrest (1) in a rotationally secure manner on a vehicle seat formed from a backrest and a seat face portion, wherein the headrest (1) is arranged on the backrest by means of at least one headrest rod (2.1, 2.2) so as to be adjustable in terms of height,
wherein there is formed at an upper end (5) of each of the headrest rods (2.1, 2.2) a region (6) in which the path of the headrest rods (2.1, 2.2) describes a curvature having a radius (r), the headrest rods (2.1, 2.2) having the curved region (6) being arranged in the headrest (1) in a positive-locking manner,
**characterized in that** the headrest (1) comprises a circular headrest member (3), wherein at each of the two sides of a headrest member (3) of the headrest (1), a receiving region (7) is shaped or formed on the headrest member (3), wherein the headrest member (3) in a longitudinal extension of the headrest (1) at least in the direction of the free ends of the receiving region (7) partially extends beyond them.

2. The headrest arrangement as claimed in claim 1, **characterized in that** the curvature in the region (6) is constructed with a constant radius (r).

3. The headrest arrangement as claimed in claim 1 or 2,
**characterized in that** an inner side (9) of the curvature is orientated in the region (6) in the travel direction (X).

4. The headrest arrangement as claimed in one of the preceding claims,
**characterized in that** the headrest rods (2.1, 2.2) are formed from a pipe portion having a round cross-section.

5. The headrest arrangement as claimed in claim 1,
**characterized in that** the receiving region (7) for the headrest rods (2.1, 2.2) is formed in the headrest member (3) so as to correspond to the headrest rods (2.1, 2.2).

6. The headrest arrangement as claimed in claim 1 or claim 5,
**characterized in that** the receiving region (7) comprises a recess (8) which is formed in terms of extent and cross-section so as to correspond to the region (6) of the headrest rods (2.1, 2.2).

7. The headrest arrangement as claimed in claim 6,
**characterized in that**, during operation of the headrest (1), the curved region (6) of each headrest rod (2.1, 2.2) is arranged completely or almost completely in a positive-locking manner in the recesses (8) of the headrest member (3).

8. The headrest arrangement as claimed in one of the preceding claims,
**characterized in that** the headrest member (3) is produced from a plastics material or a plastics admixture using a casting or injection-molding method.

## Revendications

1. Agencement d'appuie-tête conçu pour un agencement antitorsion d'un appuie-tête (1) au niveau d'un siège de véhicule formé d'un dossier et d'une partie d'assise, l'appuie-tête (1) étant disposé de façon à être réglable en hauteur au niveau du dossier à l'aide d'au moins une barre d'appuie-tête (2.1, 2.2) ;
dans lequel respectivement une région (6) dans laquelle la trajectoire des barres d'appuie-tête (2.1, 2.2) décrit une courbe avec un rayon (r) est formée au niveau d'une extrémité supérieure (5) des barres d'appuie-tête (2.1, 2.2), les barres d'appuie-tête (2.1, 2.2) étant disposées par complémentarité de formes dans l'appuie-tête (1) avec la région incurvée (6) ;
**caractérisé en ce que** l'appuie-tête (1) comprend un corps d'appuie-tête (3) en forme de cercle et **en ce que** respectivement une région réceptrice (7) est formée ou agencée des deux côtés du corps d'appuietête (3), le corps d'appuie-tête (3) saillant dans l'extension longitudinale de l'appuie-tête (1) au moins en direction des extrémités libres des régions réceptrices (7), en partie hors de celles-ci.

2. Agencement d'appuie-tête selon la revendication 1, **caractérisé en ce que** la courbe est réalisée dans la région (6) avec un rayon (r) constant.

3. Agencement d'appuie-tête selon la revendication 1 ou 2, **caractérisé en ce qu'**un côté intérieur (9) de la courbe est aligné dans la région (6) dans la direction de conduite (X).

4. Agencement d'appuie-tête selon l'une quelconque des revendications précédentes, **caractérisé en ce que** les barres d'appuie-tête (2.1, 2.2) sont formées d'une section de tube avec une section transversale ronde.

5. Agencement d'appuie-tête selon la revendication 1, **caractérisé en ce que** la région réceptrice (7) prévue pour les barres d'appuie-tête (2.1, 2.2) dans le corps d'appuie-tête (3) est formée de façon correspondante avec les barres d'appuie-tête (2.1, 2.2).

6. Agencement d'appuie-tête selon la revendication 1 ou 5, **caractérisé en ce que** la région réceptrice (7) comprend un évidement (8) formé dans la trajectoire et dont la section transversale est formée de façon correspondante à la région (6) des barres d'appuie-tête (2.1, 2.2).

7. Agencement d'appuie-tête selon la revendication 6, **caractérisé en ce qu'**en situation de fonctionnement de l'appuie-tête (1), la région incurvée (6) de chaque barre d'appuie-tête (2.1, 2.2) est entièrement ou presque entièrement disposée par complémentarité de formes dans les évidements (8) du corps d'appuie-tête (3).

8. Agencement d'appuie-tête selon l'une quelconque des revendications précédentes, **caractérisé en ce que** le corps d'appuie-tête (3) est fabriqué à partir d'une matière plastique ou d'un mélange de matière plastique lors d'un processus de coulée ou de moulage par injection.
